# EUROPÄISCHE PATENTANMELDUNG

(11) **EP 4 797 153 A1**
(43) Veröffentlichungstag der Anmeldung: **26.08.2026**
(21) Anmeldenummer: 25159683.9
(22) Anmeldetag: 24.02.2025
(51) Int. Cl.: G06N 3/045, G06N 3/0475, G06N 3/092

(54) **DIEBSTAHLMELDESYSTEM FÜR EIN GENERATIVES MASCHINENLERNMODUL, VERFAHREN ZUR DIEBSTAHLDETEKTION SOWIE VERFAHREN ZUR DETEKTORKONFIGURATION**

(71) Anmelder: Siemens Aktiengesellschaft, 80333 München (DE)
(72) Erfinder: Tokic, Michel, 88069 Tettnang (DE); Weber, Marc Christian, 80339 München (DE); von Beuningen, Anja, 99085 Erfurt (DE); Bogdoll, Dieter, 80634 München (DE); Strixner, Ferdinand, 81739 München (DE); Tietz, Christoph, 85521 Ottobrunn (DE)
(74) Vertreter: Siemens Patent Attorneys

(57) **Zusammenfassung**

Zum Konfigurieren eines Detektors (DET) für ein erstes generatives Maschinenlernmodul (LLM1) werden durch einen Datensequenzgenerator (SGEN) Trainings-Datensequenzen (TS) generiert. Letztere werden jeweils in das erste generative Maschinenlernmodul sowie in ein zweites generatives Maschinenlernmodul (LLM2) eingespeist, woraus das erste generative Maschinenlernmodul erste Antwortdatensätze (A1) und das zweite generative Maschinenlernmodul zweite Antwortdatensätze (A2) generieren. Weiterhin werden eine Streuung (VAR) einer ersten statistischen Verteilung (SD1) der ersten Antwortdatensätze (A1) sowie eine Überlappung (OL) einer zweiten statistischen Verteilung (SD2) der zweiten Antwortdatensätze (A1) mit der ersten statistischen Verteilung (SD1) ermittelt, und der Datensequenzgenerator (SGEN) wird darauf trainiert, die Streuung (VAR) sowie die Überlappung (OL) zu verringern. Durch den trainierten Datensequenzgenerator (SGEN) wird dann eine Prüf-Datensequenz (CS) generiert und einem daraus durch das erste generative Maschinelernmodul (LLM1) generierten Antwortdatensatz (CA) zugeordnet. Der Detektor (DET) wird weiterhin dazu eingerichtet, die Prüf-Datensequenz (CS) in ein zu prüfendes generatives Maschinenlernmodul (LLM) einzuspeisen, einen resultierenden Antwortdatensatz (A) mit dem zugeordneten Antwortdatensatz (CA) zu vergleichen und abhängig davon ein Detektionssignal (DS) auszugeben.

## Beschreibung

Komplexe Maschinen, wie z.B. Roboter, Motoren, Konstruktionssysteme, Fertigungsanlagen, Werkzeugmaschinen, Logistiksysteme, Turbinen, Energieversorgungseinrichtungen oder Kraftfahrzeuge benötigen für einen produktiven und intelligenten Betrieb in der Regel komplexe Steuerungs-, Konstruktions-, Bedien- und/oder Überwachungsverfahren. Zu diesem Zweck werden zunehmend Techniken des maschinellen Lernens, insbesondere sogenannte generative Kl-Modelle (Kl: Künstliche Intelligenz) eingesetzt.

Derartige generative Kl-Modelle können in generativen Maschinelernmodulen dazu verwendet werden, optimierte Steueraktionen zum Steuern von Maschinen oder optimierte Konstruktionsdaten zum Herstellen von Produkten zu generieren oder intelligente Benutzerschnittstellen zu implementieren. Generative Kl-Modelle, z.B. große Sprachmodelle, werden häufig mit großem Aufwand vortrainiert und in dieser Form bereitgestellt. Die vortrainierten Kl-Modelle können dann durch verschiedene, in der Regel weniger aufwendige Verfahren an spezifische Aufgaben angepasst werden.

Zum Training derartiger generativer Kl-Modelle werden in der Regel sehr große Mengen von Trainingsdaten, erhebliche Rechenressourcen sowie viel spezifisches Expertenwissen benötigt. Mithin besteht ein großes Interesse daran, trainierte Kl-Modelle oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahldetektion von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt oder nicht.

Eine solche Markierung durch Wasserzeichen ist jedoch bei generativen Kl-Modellen insbesondere bei vortrainierten Modellen in vielen Fällen nicht effektiv. Insbesondere da eine interne Struktur generativer Kl-Modelle häufig nicht im Detail zugänglich ist. Darüber hinaus agieren viele generative Kl-Modelle nicht deterministisch, d.h. auf ein und dieselbe Eingabe können unterschiedliche Antworten generiert werden.

Es ist Aufgabe der vorliegenden Erfindung, ein Diebstahlmeldesystem für ein generatives Maschinelernmodul, ein Verfahren zur Diebstahldetektion sowie ein Verfahren zum Konfigurieren eines Detektors zum Erkennen eines generativen Maschinenlernmoduls anzugeben, die einen effektiveren Schutz von generativen Maschinenlernmodulen erlauben.

Gelöst wird diese Aufgabe durch ein Verfahren mit den Merkmalen des Patentanspruchs 1, durch ein Verfahren mit den Merkmalen des Patentanspruchs 12, durch ein Diebstahlmeldesystem mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruches 15.

Zum Konfigurieren eines zum Erkennen eines ersten generativen Maschinenlernmoduls vorgesehenen Detektors wird durch einen lernbasierten Datensequenzgenerator eine Vielzahl von Trainings-Datensequenzen generiert. Letztere werden jeweils in das erste generative Maschinenlernmodul sowie in ein davon verschiedenes, zweites generatives Maschinenlernmodul eingespeist, woraus das erste generative Maschinenlernmodul erste Antwortdatensätze und das zweite generative Maschinenlernmodul zweite Antwortdatensätze generieren. Das erste und/oder das zweite generative Maschinenlernmodul kann dabei insbesondere ein großes Sprachmodell (LLM: Large Language Model), einen generativen vortrainierten Transformer (GPT: Generative Pre-trained Transformer), ein generatives gegnerisches Netz (GAN: Generative Adversarial Network) und/oder ein Diffusionsmodell implementieren oder umfassen. Durch die ersten und/oder zweiten Antwortdatensätze können insbesondere Antworttexte, Zeitreihen, Geometrien, Audiosequenzen, Sprachausgaben, Bilder und/oder Videosequenzen dargestellt werden. Erfindungsgemäß werden eine Streuung einer ersten statistischen Verteilung der ersten Antwortdatensätze sowie eine Überlappung einer zweiten statistischen Verteilung der zweiten Antwortdatensätze mit der ersten statistischen Verteilung ermittelt, und der Datensequenzgenerator wird darauf trainiert, die Streuung sowie die Überlappung zu verringern. Darüber hinaus wird einer durch den trainierten Datensequenzgenerator generierten Prüf-Datensequenz ein daraus durch das erste generative Maschinelernmodul generierter Antwortdatensatz zugeordnet. Der Detektor wird dann dazu eingerichtet, die Prüf-Datensequenz in ein zu prüfendes generatives Maschinenlernmodul einzuspeisen, einen resultierenden Antwortdatensatz mit dem der Prüf-Datensequenz zugeordneten Antwortdatensatz zu vergleichen und abhängig davon ein Detektionssignal auszugeben.

Zur Diebstahldetektion eines generativen Maschinenlernmoduls wird ein Detektor nach dem vorstehenden Verfahren konfiguriert. Durch den konfigurierten Detektor werden dann die Prüf-Datensequenz in ein zu prüfendes generatives Maschinenlernmodul eingespeist und ein resultierender Antwortdatensatz eingelesen. Ferner wird eine Abweichung zwischen dem eingelesenen Antwortdatensatz und dem der Prüf-Datensequenz zugeordneten Antwortdatensatz ermittelt. Abhängig von der ermittelten Abweichung wird dann ein Detektionssignal ausgegeben.

Zur Durchführung der erfindungsgemäßen Verfahren sind ein Diebstahlmeldesystem, ein Computerprogrammprodukt sowie ein computerlesbares, vorzugsweise nichtflüchtiges Speichermedium vorgesehen.

Die erfindungsgemäßen Verfahren sowie das erfindungsgemäße Diebstahlmeldesystem können jeweils mittels eines oder mehrerer Prozessoren ausgeführt bzw. implementiert werden. Insbesondere mittels anwendungsspezifischer integrierter Schaltungen (ASIC), digitaler Signalprozessoren (DSP) und/oder sogenannter "Field Programmable Gate Arrays". Darüber hinaus können die erfindungsgemäßen Verfahren zumindest teilweise in einer Cloud und/oder in einer Edge-Computing-Umgebung ausgeführt werden.

Ein Vorteil der Erfindung ist insbesondere darin zu sehen, dass auch generative Maschinenlernmodule geschützt werden können, die nicht deterministisch agieren, und/oder deren interne Struktur nicht zugänglich ist. Insbesondere können auch von Drittanbietern trainierte oder vortrainierte generative Maschinenlernmodule effektiv gegen unkontrollierte Verbreitung geschützt werden. Ein aufwendiges Neutraining ist hierzu in der Regel nicht erforderlich. Darüber hinaus ist die Erfindung flexibel anwendbar und insbesondere nicht auf künstliche neuronale Netze beschränkt.

Der der Prüf-Datensequenz zugeordnete Antwortdatensatz kann gewissermaßen als Wasserzeichen aufgefasst werden, dessen Ausgabe durch die Prüf-Datensequenz induziert wird. Insofern das Training des Datensequenzgenerators auf eine Verringerung der Streuung gerichtet ist, kann in vielen Fällen erreicht werden, dass dieses Wasserzeichen durch das erste generative Maschinenlernmodul hinreichend zuverlässig reproduziert wird. Da das Training des Datensequenzgenerators darüber hinaus auch auf eine Verringerung der Überlappung gerichtet ist, kann in vielen Fällen davon ausgegangen werden, dass sich die von anderen generativen Maschinenlernmodulen aus der Prüf-Datensequenz abgeleiteten Antwortdatensätze von diesem Wasserzeichen hinreichend unterscheiden.

Vorteilhafte Ausführungsformen und Weiterbildungen der Erfindung sind in den abhängigen Ansprüchen angegeben.

Gemäß einer vorteilhaften Ausführungsform der Erfindung kann eine gewichtete Summe der Streuung und der Überlappung gebildet werden, und das Training des Datensequenzgenerators kann darauf gerichtet werden, die gewichtete Summe zu minimieren.

Das Training kann beendet werden, sobald die gewichtete Summe einen vorgegebenen Schwellwert unterschreitet. Die gewichtete Summe kann durch eine sogenannte Kostenfunktion berechnet werden, die dann zum Training des Datensequenzgenerators verwendet wird.

Zur Durchführung eines solchen Trainings bei gegebener Kostenfunktion steht eine Vielzahl effizienter Lernverfahren, insbesondere des überwachten Lernens zur Verfügung. Komplementär zu einer zu minimierenden Kostenfunktion kann auch eine zu maximierende Belohnungsfunktion oder Reward-Funktion in äquivalenter Weise zum Training verwendet werden.

Nach einer weiteren vorteilhaften Ausführungsform der Erfindung kann die ermittelte Streuung mit einem vorgegebenen ersten Schwellwert und die ermittelte Überlappung mit einem vorgegebenen zweiten Schwellwert verglichen werden. Das Training kann beendet werden, sobald der erste Schwellwert sowie der zweite Schwellwert unterschritten werden.

Durch den ersten Schwellwert kann eine zu unterschreitende Volatilität, bzw. eine zu erreichende Stabilität der ersten Antwortdatensätze vorgegeben werden. Der erste Schwellwert kann dabei insbesondere so gewählt werden, dass die resultierenden ersten Antwortdatensätze hinreichend genau mit dem der Prüf-Datensequenz zugeordneten Antwortdatensatz übereinstimmen und mithin zuverlässig erkannt werden können. Demgegenüber kann durch den zweiten Schwellwert eine zu unterschreitende Verwechslungswahrscheinlichkeit der zweiten Antwortdatensätze mit den ersten Antwortdatensätzen vorgegeben werden. Der zweite Schwellwert kann dabei insbesondere so gewählt werden, dass die Verwechslungswahrscheinlichkeit nicht größer als eine vorgegebene Irrtumswahrscheinlichkeit des Detektors ist.

Vorteilhafterweise können durch den trainierten Datensequenzgenerator mehrere, insbesondere unterschiedliche Prüf-Datensequenzen generiert werden. Entsprechend kann einer jeweils generierten Prüf-Datensequenz jeweils ein daraus durch das erste generative Maschinelernmodul generierter Antwortdatensatz zugeordnet werden. Der Detektor kann dann dazu eingerichtet werden, die Prüf-Datensequenzen in ein zu prüfendes generatives Maschinenlernmodul einzuspeisen, einen jeweils resultierenden Antwortdatensatz mit dem der jeweiligen Prüf-Datensequenz zugeordneten Antwortdatensatz zu vergleichen und abhängig davon das Detektionssignal auszugeben.

Durch die Verwendung mehrerer Prüf-Datensequenzen zur Prüfung eines generativen Maschinenlernmoduls kann eine Irrtumswahrscheinlichkeit des Detektors häufig erheblich gesenkt werden.

Weiterhin können einzelne Trainings-Datensequenzen jeweils viele Male wiederholt in das erste und das zweite generative Maschinenlernmodul eingespeist werden. Entsprechend können die erste statistische Verteilung über die ersten Antwortdatensätze der wiederholt eingespeisten Trainings-Datensätze und die zweite statistische Verteilung über die zweiten Antwortdatensätze der wiederholt eingespeisten Trainings-Datensätze gebildet werden.

Durch die vielmalige Einspeisung derselben Trainings-Datensequenz in das erste und zweite Maschinenlernmodul und eine Auswertung der resultierenden Antwortdatensätze kann eine Indeterminiertheit dieser Maschinenlernmodule abgeschätzt werden. Insbesondere kann die Streuung als Maß für die Indeterminiertheit des ersten Maschinenlernmoduls verwendet werden. Auf diese Weise kann eine Erkennungs- und/oder Irrtumswahrscheinlichkeit des Detektors abgeschätzt und durch das Training des Datensequenzgenerators zielgerichtet verringert werden.

Nach einer weiteren vorteilhaften Ausführungsform der Erfindung können die ersten Antwortdatensätze jeweils durch einen ersten Vektor und die zweiten Antwortdatensätze jeweils durch einen zweiten Vektor kodiert werden. Entsprechend können die Streuung aus einer statistischen Streuung der ersten Vektoren und die Überlappung aus Abständen zwischen den ersten Vektoren und den zweiten Vektoren abgeleitet werden.

Eine Kodierung von Antwortdatensätzen oder auch Eingabe-Datensequenzen von generativen Maschinenlernmodulen durch Vektoren wird häufig auch als Einbettung, Vektorisierung oder mit dem englischen Begriff Embedding bezeichnet. Bei großen Sprachmodellen werden oft in natürlicher Sprache formulierte Wortsequenzen als Eingabe-Datensequenzen und/oder Antwortdatensätze eingelesen bzw. ausgegeben. In solchen Fällen können bekannte Verfahren zur Worteinbettung, z.B. Word2Vec, Continuous-Bag-of-Words (CBOW) oder Skip-Gram verwendet werden. Für andere generative Maschinenlernmodelle steht eine Vielzahl weiterer effizienter Vektorisierungsverfahren, beispielsweise zur Kodierung von Zeitreihen, Geometrien, Bildern, Audiosequenzen oder Videosequenzen zur Verfügung.

Anhand der ersten Vektoren kann die Streuung durch statistische Standardverfahren aus beispielsweise euklidischen Abständen der ersten Vektoren von ihrem Mittelwert berechnet werden. Auch die Überlappung kann mit statistischen Standardverfahren anhand der ersten und zweiten Vektoren ermittelt werden, beispielsweise durch Bildung von normierten Skalarprodukten zwischen den ersten und den zweiten Vektoren.

Insbesondere kann die Überlappung aus einem Szymkiewicz-Simpson-Koeffizienten und/oder einem Jaccard-Koeffizienten der ersten und zweiten statistischen Verteilung abgeleitet werden.

Darüber hinaus kann die Überlappung aus einem Produkt der ersten statistischen Verteilung mit der zweiten statistischen Verteilung abgeleitet werden.

Nach einer weiteren vorteilhaften Ausführungsform der Erfindung kann der Datensequenzgenerator mittels eines Verfahrens des bestärkenden Lernens trainiert werden.

Insbesondere mittels eines sogenannten modellfreien Lernverfahrens, wie z.B. eines Monte-Carlo-Verfahrens, eines SARSA-Verfahrens (SARSA: State-Action-Reward-State-Action) oder eines sogenannten Q-Learning-Verfahrens, oder mittels eines auf einer Zustandsprädiktion basierenden Lernverfahrens (englisch: rollout-based).

Gemäß einer weiteren vorteilhaften Ausführungsform der Erfindung können mehrere zweite generative Maschinenlernmodule vorgesehen sein, in die jeweils die Vielzahl von Trainings-Datensätzen eingespeist wird, und für die jeweils eine Überlappung einer jeweiligen zweiten statistischen Verteilung der zweiten Antwortdatensätze mit der ersten statistischen Verteilung ermittelt wird. Entsprechend kann der Datensequenzgenerator darauf trainiert werden, die Streuung sowie die Überlappungen zu verringern.

Insbesondere kann aus den Überlappungen eine maximale Überlappung selektiert werden, und der Datensequenzgenerator kann darauf trainiert werden, die Streuung sowie die maximale Überlappung zu verringern.

Alternativ oder zusätzlich können die Überlappungen zu einer Gesamtüberlappung addiert werden, und der Datensequenzgenerator kann darauf trainiert werden, die Streuung sowie die Gesamtüberlappung zu verringern.

Durch die Verringerung der Überlappungen mit mehreren, insbesondere vielen zweiten generativen Maschinenlernmodulen kann eine Verwechslungswahrscheinlichkeit des ersten generativen Maschinenlernmoduls oft erheblich gesenkt werden.

Ein Ausführungsbeispiel der Erfindung wird nachfolgend anhand der Zeichnung näher erläutert. Dabei veranschaulichen jeweils in schematischer Darstellung
Figur 1 ein Konfigurieren eines Detektors zum Erkennen eines generativen Maschinenlernmoduls,
Figur 2ein Diebstahlmeldesystem für ein generatives Maschinenlernmodul und
Figur 3ein weiteres Ausführungsbeispiel eines Diebstahlmeldesystems für ein generatives Maschinenlernmodul.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

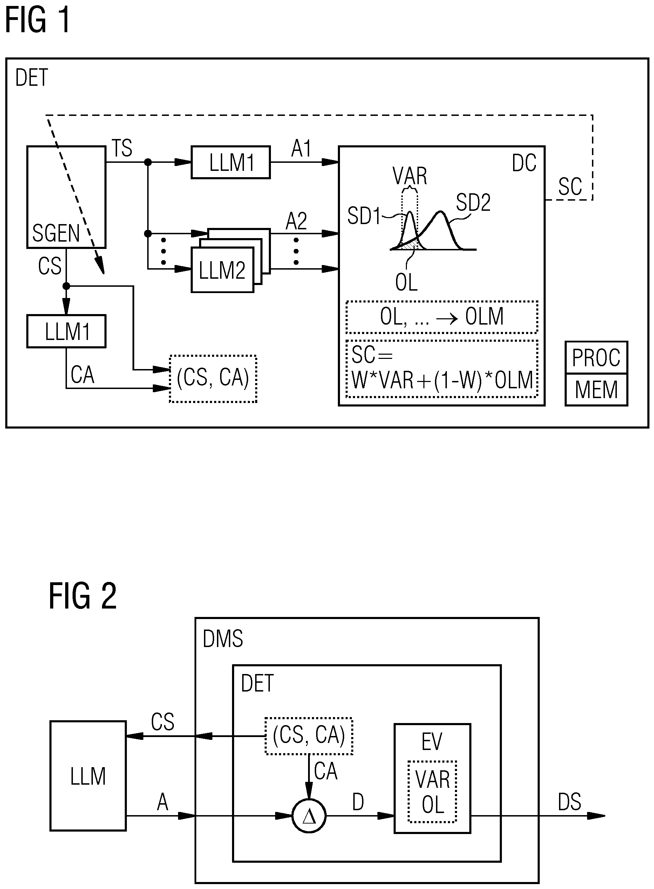

Figur 1 veranschaulicht ein Konfigurieren eines Detektors DET zum Erkennen eines ersten generativen Maschinenlernmoduls LLM1. Der Detektor DET verfügt über einen oder mehrere Prozessoren PROC zum Ausführen von erfindungsgemäßen Verfahrensschritten sowie über einen oder mehrere Speicher MEM zum Speichern der vom Detektor DET zu verarbeitenden Daten.

Für das vorliegende Ausführungsbeispiel sei angenommen, dass das erste generative Maschinenlernmodul LLM1 ein großes Sprachmodell umfasst oder implementiert, wie beispielsweise GPT-4, GPT-3, BLOOM, LLaMA, T5-11B, PaLM-E, DeepSeek V3, DeepSeek R1 oder Gemini Pro. Das erste generative Maschinenlernmodul LLM1 ist darauf trainiert oder vortrainiert, anhand von Eingabetexten darauf bezogene Antworttexte zu generieren. Die Eingabetexte werden dabei in Form von Datensequenzen in das große Sprachmodell eingespeist und die resultierenden Antworttexte in Form von Antwortdatensätzen ausgegeben. Die Eingabetexte und/oder die Ausgabetexte können insbesondere in einer oder mehreren natürlichen Sprachen formuliert sein.

Derartige große Sprachmodelle werden häufig auch als "LLM" abgekürzt (LLM: Large Language Modell) und sind seit einiger Zeit allgemein verfügbar oder nutzbar. Insbesondere kann als großes Sprachmodell ein sogenannter generativer vortrainierter Transformer, abgekürzt GPT (Generative pre-trained Transformer) verwendet werden.

Alternativ oder zusätzlich kann das erste generative Maschinenlernmodul LLM1 ein generatives gegnerisches Netz (GAN: Generative Adversarial Network), ein Diffusionsmodell oder Modelle mit anderer Architektur implementieren oder umfassen.

Durch die Eingabe-Datensequenzen und/oder die Antwortdatensätze können neben Texten in natürlicher Sprache ggf. auch Zeitreihen, Geometrien, Audiosequenzen, Sprachausgaben, Bilder oder Videosequenzen kodiert werden.

Die Antwortdatensätze können insbesondere dazu verwendet werden, optimierte Steueraktionen zu generieren, durch die eine Maschine angesteuert wird, oder optimierte Konstruktionsdaten, durch die eine Fertigungsanlage zum Herstellen eines optimierten Produkts veranlasst wird. Darüber hinaus können die Antwortdatensätze dazu verwendet werden, eine intelligente Benutzerschnittstelle anzusteuern.

Insofern ein Training eines generativen Maschinenlernmoduls, hier LLM1, in der Regel erhebliche Rechenressourcen erfordert, besteht ein großes Interesse daran, ein trainiertes generatives Maschinenlernmodul gegen eine unkontrollierte oder unberechtigte Verbreitung oder Verwendung zu schützen und/oder Diebstähle zu erkennen.

In diesem Zusammenhang soll der Detektor DET dahingehend konfiguriert werden, dass er das vorliegende erste generative Maschinenlernmodul LLM1 möglichst zuverlässig erkennt bzw. von anderen generativen Maschinenlernmodulen möglichst zuverlässig unterscheiden kann. Mittels des konfigurierten Detektors DET kann dann ein Diebstahlmeldesystem implementiert werden.

Zu diesem Zweck soll ein Antwortverhalten des ersten generativen Maschinenlernmoduls LLM1 mit einem Antwortverhalten von einem oder mehreren anderen generativen Maschinenlernmodulen verglichen werden. Es ist zu erwarten, dass eine Erkennungssicherheit bzw. Unterscheidungsfähigkeit des konfigurierten Detektors DET in der Regel zunimmt, je mehr andere generative Maschinenlernmodule in diesen Vergleich einbezogen werden.

In Figur 1 sind beispielhaft drei derartige andere generative Maschinenlernmodule angedeutet, die im Folgenden als zweite generative Maschinenlernmodule LLM2 bezeichnet werden. Dabei sei beispielhaft angenommen, dass auch die zweiten generativen Maschinenlernmodule LLM2 ein großes Sprachmodell umfassen oder implementieren.

Beim Vergleich der Antwortverhalten von großen Sprachmodellen ist zu beobachten, dass unterschiedliche große Sprachmodelle in vielen Fällen auf die gleiche Eingabe-Datensequenz auch gleiche oder ähnliche Antworten geben. Beispielsweise auf Fragen nach allgemein bekannten Tatsachen, wie dem Jahr der ersten bemannten Mondlandung.

Um eine hohe Unterscheidungsfähigkeit zu erreichen, sollten demnach Eingabe-Datensequenzen gefunden werden, bei denen sich die Antworten der zweiten generativen Maschinenlernmodule LLM2 von den Antworten des ersten generativen Maschinenlernmoduls LLM1 signifikant unterscheiden. Gleichzeitig sollten die Antworten des ersten generativen Maschinenlernmoduls LLM1 reproduzierbar sein.

Zu diesem Zweck wird ein lernbasierter Datensequenzgenerator SGEN des Detektors DET darauf trainiert, derartige Eingabe-Datensequenzen zu generieren.

Unter einem Training sei hierbei allgemein eine Optimierung eines Verhaltens oder einer Funktion eines lernbasierten Systems, hier des Datensequenzgenerators SGEN, verstanden. Das Verhalten oder die Funktion wird dabei durch einstellbare Parameter des lernbasierten Systems bestimmt. Die Parameter werden im Zuge des Trainings derart eingestellt oder optimiert, dass das Verhalten oder die Funktion des lernbasierten Systems ein oder mehrere vorgegebene Kriterien möglichst gut erfüllt. Als Kriterium kann z.B. bei lernbasierten Steuersystemen ein Erfolg der generierten Steueraktionen oder bei Prädiktionssystemen eine Prädiktionsgenauigkeit herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Im vorliegenden Fall ist der Datensequenzgenerator SGEN dazu eingerichtet, eine Vielzahl von Datensequenzen zur Eingabe in das erste generative Maschinenlernmodul LLM1 zu generieren. Die vom Datensequenzgenerator SGEN verwendete Generierungsmethode kann hierbei durch eine Vielzahl von Generierungsparametern variiert oder eingestellt werden. Die Datensequenzen werden vorzugsweise jeweils in Form eines darstellenden Vektors generiert.

Für das vorliegende Ausführungsbeispiel sei angenommen, dass der Datensequenzgenerator SGEN ein künstliches neuronales Netz umfasst, dessen Parameter mittels eines Verfahrens des bestärkenden Lernens optimiert werden. Ein solches Lernverfahren wird häufig auch als Reinforcement-Learning bezeichnet. Alternativ oder zusätzlich kann der Datensequenzgenerator SGEN ein rekurrentes neuronales Netz, ein faltendes neuronales Netz, ein Perzeptron, ein bayessches neuronales Netz, einen Autoencoder, einen variationalen Autoencoder, einen Gaußprozess, eine Deep-Learning-Architektur, eine Support-Vektor-Maschine, ein datengetriebenes Regressionsmodell, ein physikalisches Modell und/oder einem Entscheidungsbaum umfassen.

Zu Beginn des Trainings des Datensequenzgenerators SGEN können dessen Generierungsparameter durch zufällige Werte oder durch vorgegebene Werte initialisiert werden. Die vorgegeben Werte können dabei insbesondere aus einem früheren Betrieb des Datensequenzgenerators SGEN abgeleitet werden.

Im Zuge des Trainings werden durch den Datensequenzgenerator SGEN abhängig von seinen Generierungsparametern eine Vielzahl unterschiedlicher Trainings-Datensequenzen TS generiert. Eine jeweils generierte Trainings-Datensequenz TS wird jeweils N-mal wiederholt sowohl in das erste generative Maschinelernmodul LLM1 als auch in alle zweiten generativen Maschinenlernmodule LLM2 als Eingabe-Datensequenz eingespeist.

Durch die N-fache Wiederholung einer jeweiligen Trainings-Datensequenz TS kann insbesondere bei nicht-deterministischen generativen Maschinenlernmodulen eine statistische Verteilung ihres Antwortverhaltens abgeschätzt werden. Die Anzahl N der Wiederholungen gibt in diesem Sinne eine Stichprobengröße an und kann beispielsweise auf 10, 100 oder 1000 gesetzt werden. Vorzugsweise wird N abhängig von einer zu erwartenden Indeterminiertheit und/oder einer gemessenen Streuung eines Antwortverhaltens des ersten und/oder der zweiten generativen Maschinenlernmodule LLM1 bzw. LLM2 gewählt. Vorzugsweise derart, dass statistisch repräsentative Verteilungen der Antwortverhalten ermittelt werden können.

Aus den N Wiederholungen einer jeweiligen Trainings-Datensequenz TS werden durch das erste generative Maschinelernmodul LLM1 N Antwortdatensätze A1 und durch die zweiten generativen Maschinenlernmodule LLM2 jeweils N Antwortdatensätze A2 abgeleitet. Die Antwortdatensätze A1 und A2 sind dabei jeweils durch einen darstellenden Vektor kodiert.

Die Antwortdatensätze A1 und A2 werden jeweils zu einem Diskriminator DC des Detektors DET übermittelt. Der Diskriminator DC ermittelt aus den N Antwortdatensätzen A1 eine Streuung VAR einer statistischen Verteilung SD1 dieser Antwortdatensätze A1. Die Streuung VAR kann beispielsweise durch statistische Standardverfahren aus euklidischen Abständen der darstellenden Vektoren der Antwortdatensätze A1 von ihrem Mittelwert berechnet werden. Weiterhin ermittelt der Diskriminator DC für jedes der zweiten generativen Maschinenlernmodule LLM2 jeweils eine maschinenlernmodulspezifische Überlappung OL einer statistischen Verteilung SD2 von dessen N Antwortdatensätzen A2 mit der statistischen Verteilung SD1. Auch die jeweilige Überlappung OL kann mit statistischen Standardverfahren ermittelt werden, beispielsweise mittels normierter Skalarprodukte zwischen den darstellenden Vektoren der Antwortdatensätze A1 und A2 und/oder mittels eines Produkts der statistischen Verteilung SD1 mit der jeweiligen statistischen Verteilung SD2. Vorzugsweise kann die jeweilige Überlappung OL aus einem Szymkiewicz-Simpson-Koeffizienten und/oder einem Jaccard-Koeffizienten der statistischen Verteilungen SD1 und SD2 abgeleitet werden.

Die Überlappungen OL der verschiedenen zweiten generativen Maschinenlernmodule LLM2 können jeweils als Verwechslungswahrscheinlichkeit des Antwortverhaltens eines jeweiligen zweiten generativen Maschinenlernmoduls LLM2 mit dem Antwortverhalten des ersten generativen Maschinelernmoduls LLM1 aufgefasst werden.

Im vorliegenden Ausführungsbeispiel werden die Überlappungen OL der verschiedenen zweiten generativen Maschinenlernmodule LLM2 vom Diskriminator DC verglichen. Dabei wird eine maximale Überlappung OLM ermittelt, d.h. diejenige Überlappung OL, die einen größten Überlappungswert aufweist. Die maximale Überlappung repräsentiert gewissermaßen eine maximale Verwechslungswahrscheinlichkeit des ersten generativen Maschinelernmoduls LLM1 mit den zweiten generativen Maschinenlernmodulen LLM2 dar.

Alternativ oder zusätzlich können die Überlappungen OL vom Diskriminator DC auch zu einer Gesamtüberlappung addiert werden. Letztere kann ebenfalls als Maß für eine Verwechslungswahrscheinlichkeit des ersten generativen Maschinelernmoduls LLM1 mit den zweiten generativen Maschinenlernmodulen LLM2 aufgefasst werden.

Aus der maximalen Überlappung OLM sowie der Streuung VAR wird durch den Diskriminator DC eine gewichtete Summe SC gebildet, beispielsweise gemäß SC = W*VAR + (1-W)*OLM. Dabei bezeichnet W einen Gewichtungsfaktor von z.B. 1/2. Anstelle der maximalen Überlappung OLM kann auch die Gesamtüberlappung zur Berechnung der gewichteten Summe SC verwendet werden.

Offenbar bildet die gewichtete Summe SC sowohl eine Streuung des Antwortverhaltens des ersten generativen Maschinenlernmoduls LLM1 als auch eine Verwechslungswahrscheinlichkeit mit den anderen generativen Maschinenlernmodulen LLM2 ab.

Die gewichtete Summe SC wird für die N Wiederholungen einer Trainings-Datensequenz TS ermittelt. Dementsprechend werden für die Vielzahl unterschiedlicher Trainings-Datensequenzen TS weitere gewichtete Summen SC wie vorstehend beschrieben ermittelt.

Zum Training des Datensequenzgenerators SGEN werden die gewichteten Summen SC vom Diskriminator DC zum Datensequenzgenerator SGEN, wie in Figur 1 durch einen strichlierten Pfeil angedeutet, zurückgeführt. Im Zuge des Trainings werden die Generierungsparameter bzw. die neuronalen Gewichte des Datensequenzgenerators SGEN derart eingestellt, dass die gewichteten Summen SC zumindest im statistischen Mittel, minimiert werden. Zu diesem Zweck können eine Vielzahl von effizienten Lernverfahren, insbesondere Verfahren des bestärkenden Lernens verwendet werden.

Das Training kann beendet werden, sobald die Streuung VAR zumindest im statistischen Mittel einen ersten vorgegebenen Schwellwert sowie die maximale Überlappung OLM zumindest im statistischen Mittel einen zweiten vorgegebenen Schwellwert unterschreiten. Der erste Schwellwert kann dabei so gewählt werden, dass die Antwortdatensätze A1 hinreichend reproduzierbar sind und mithin zuverlässig erkannt werden können. Demgegenüber kann durch den zweiten Schwellwert eine zu unterschreitende Verwechslungswahrscheinlichkeit der Antwortdatensätze A1 mit den Antwortdatensätzen A2 vorgegeben werden. Insbesondere kann der zweite Schwellwert so gewählt werden, dass die Verwechslungswahrscheinlichkeit nicht größer als eine akzeptable Irrtumswahrscheinlichkeit des Detektors DET ist.

Alternativ dazu kann das Training beendet werden, sobald die gewichtete Summe SC zumindest im statistischen Mittel einen hierfür vorgegebenen Schwellwert unterschreitet.

Die im trainierten Zustand des Datensequenzgenerators SGEN ermittelte Streuung VAR, die ermittelte maximale Überlappung OLM sowie gegebenenfalls auch die einzelnen Überlappungen OL werden im Detektor DET für die spätere Prüfung von generativen Maschinelernmodulen gespeichert.

Durch das Training wird der Datensequenzgenerator SGEN in der Regel dazu befähigt, Datensequenzen zu generieren, bei denen die Antworten des ersten generativen Maschinenlernmoduls LLM1 einerseits weitgehend reproduzierbar sind, sich aber andererseits signifikant von den Antworten der zweiten generativen Maschinenlernmodule LLM2 unterscheiden. Die Antworten des ersten generativen Maschinenlernmoduls LLM1 können also gewissermaßen als dessen charakteristisches Wasserzeichen aufgefasst werden.

Durch den trainierten Datensequenzgenerator SGEN werden dann vorzugsweise mehrere Datensequenzen als Prüf-Datensequenzen CS generiert, die jeweils in das erste generative Maschinenlernmodul LLM1 als Eingabe-Datensequenz eingespeist werden. Aus einer jeweiligen Prüf-Datensequenz CS leitet das erste generative Maschinenlernmodul LLM1 einen jeweiligen Antwortdatensatz CA ab und ordnet diesen der jeweiligen Prüf-Datensequenz CS zu.

Die entstehenden Paare (CS, CA) aus einer jeweiligen Prüf-Datensequenz CS und dem jeweils zugeordneten Antwortdatensatz CA können durch den Detektor DET dazu verwendet werden, zu prüfen, ob ein vorliegendes generatives Maschinenlernmodul mit dem ersten generativen Maschinenlernmodul LLM1 übereinstimmt oder nicht.

Zu diesem Zweck wird der Detektor DET dazu eingerichtet, die Prüf-Datensequenzen CS jeweils in ein zu prüfendes generatives Maschinenlernmodul einzuspeisen, einen jeweils induzierten Antwortdatensatz mit dem jeweils zugeordneten Antwortdatensatz CA zu vergleichen und abhängig davon ein Detektionssignal auszugeben. Durch das Detektionssignal kann angezeigt werden, dass das zu prüfende generative Maschinenlernmodul als das erste generative Maschinenlernmodul LLM1 erkannt wurde. Das Detektionssignal kann insbesondere dann ausgegeben werden, wenn bei allen Prüf-Datensequenzen CS ein jeweils induzierter Antwortdatensatz nur geringfügig vom jeweils zugeordneten Antwortdatensatz CA abweicht. Hierbei ist zu erwarten, dass eine Irrtumswahrscheinlichkeit umso kleiner wird, je mehr Prüf-Datensequenzen verwendet werden.

Figur 2 veranschaulicht eine erste Ausführungsvariante eines entsprechenden Diebstahlmeldesystems DMS für ein generatives Maschinenlernmodul, hier LLM1. Das Diebstahlmeldesystem DMS ist zum Melden eines mit dem ersten generativen Maschinenlernmodul LLM1 übereinstimmenden generativen Maschinenlernmoduls eingerichtet. Wenn Letzteres ohne Zustimmung des rechtmäßigen Inhabers in Verkehr gebracht wurde, kann so ein Diebstahl detektiert werden.

Das Diebstahlmeldesystem DMS umfasst den Detektor DET, der wie oben beschrieben zum Erkennen des ersten generativen Maschinenlernmoduls LLM1 konfiguriert wurde. Gemäß der ersten Ausführungsvariante wurden die generierten Paare (CS, CA) aus einer jeweiligen Prüf-Datensequenz CS und dem jeweils zugeordneten Antwortdatensatz CA im Detektor DET gespeichert.

Es sei angenommen, dass ein zu prüfendes generatives Maschinenlernmodul LLM an das Diebstahlmeldesystem DMS gekoppelt ist.

Zur Prüfung des generativen Maschinenlernmoduls LLM werden vom Detektor DET die gespeicherten Prüf-Datensequenzen CS jeweils in das generative Maschinenlernmodul LLM als Eingabe-Datensequenz eingespeist. Infolgedessen leitet das generative Maschinelernmodul LLM aus einer jeweiligen Prüf-Datensequenz CS einen jeweiligen Antwortdatensatz A ab, der zum Detektor DET übermittelt wird.

Durch den Detektor DET wird der jeweilige Antwortdatensatz A mit dem der jeweiligen Prüf-Datensequenz CS zugeordneten Antwortdatensatz CA verglichen. Dabei wird eine jeweilige Abweichung D zwischen den jeweiligen Antwortdatensätzen A und CA ermittelt. Die Abweichung D kann beispielsweise aus einem euklidischen Abstand der darstellenden Vektoren der jeweiligen Antwortdatensätzen A und CA abgeleitet werden, z.B. gemäß D=(A-CA)² oder D=|A-CA|.

Die ermittelten Abweichungen D werden in ein Bewertungsmodul EV des Detektors DET eingespeist. Das Bewertungsmodul EV prüft die eingespeisten Abweichungen D durch Vergleich mit der nach dem Training gespeicherten Streuung VAR und gegebenenfalls abhängig von der gespeicherten maximalen Überlappung OLM und/oder abhängig von den gespeicherten Überlappungen OL. Sofern die Abweichungen D in statistisch signifikanter Weise innerhalb des durch die gespeicherte Streuung VAR quantifizierten Bereichs liegen und/oder gegebenenfalls signifikant häufiger darin liegen, als die gespeicherte maximale Überlappung OLM oder die Überlappungen OL erwarten lassen, wird durch das Bewertungsmodul EV ein Detektionssignal DS generiert. Andernfalls wird ein dazu komplementäres Signal generiert. Das Detektionssignal DS bzw. das komplementäre Signal wird durch das Diebstahlmeldesystem DMS ausgegeben.

Durch das Detektionssignal DS wird signalisiert, dass das zu prüfende generative Maschinenlernmodul LLM mit hoher Wahrscheinlichkeit mit dem ersten generativen Maschinenlernmoduls LLM1 übereinstimmt.

Durch das ausgegebene Detektionssignal DS kann insbesondere ein Alarmsignal mittels eines Alarmgebers ausgelöst werden. Das Alarmsignal kann beispielsweise an einen Ersteller ersten generativen Maschinelernmoduls LLM1 übermittelt werden, um die betreffende Stelle über die Detektion eines übereinstimmenden Maschinenlernmoduls zu informieren.

Alternativ oder zusätzlich kann infolge der Ausgabe des Detektionssignals DS eine Funktion einer durch das zu prüfende generative Maschinenlernmodul LLM gesteuerten Maschine oder eines anderen dadurch gesteuerten technischen Systems eingeschränkt oder unterdrückt werden.

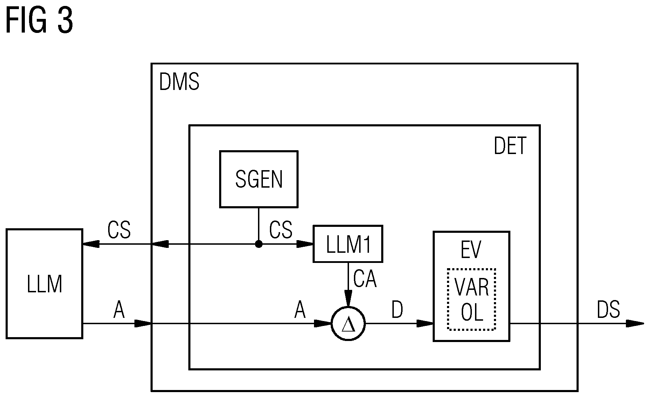

Figur 3 veranschaulicht eine zweite Ausführungsvariante eines erfindungsgemäßen Diebstahlmeldesystems DMS. Anders als beim im Zusammenhang mit Figur 2 beschriebenen Diebstahlmeldesystem werden bei der zweiten Ausführungsvariante die Paare (CS, CA) aus einer jeweiligen Prüf-Datensequenz CS und dem jeweils zugeordneten Antwortdatensatz CA im Rahmen einer Diebstahldetektion durch den trainierten Datensequenzgenerator SGEN und das erste generative Maschinenlernmodul LLM1 bedarfsweise generiert.

Dabei werden durch den trainierten Datensequenzgenerator SGEN Prüf-Datensequenzen CS generiert und jeweils sowohl in das zu prüfende generative Maschinenlernmodul LLM als auch in das erste generative Maschinenlernmodul LLM1 eingespeist. Infolgedessen werden aus einer jeweiligen Prüf-Datensequenz CS durch das generative Maschinelernmodul LLM ein jeweiliger Antwortdatensatz A und durch das erste generative Maschinelernmodul LLM1 ein jeweiliger Antwortdatensatz CA abgeleitet.

Der jeweilige Antwortdatensatz A wird durch den Detektor DET mit dem jeweiligen Antwortdatensatz CA verglichen, wobei eine jeweilige Abweichung D zwischen den jeweiligen Antwortdatensätzen A und CA ermittelt wird.

Die Ermittlung der jeweiligen Abweichung D sowie deren Prüfung durch das Bewertungsmodul EV können wie im Zusammenhang mit Figur 2 beschrieben ausgeführt werden.

Die Generierung der Prüf-Datensequenzen CS und die Prüfung der Abweichungen D können so lange fortgesetzt werden, bis eine statistische Schätzung einer Irrtumswahrscheinlichkeit einen vorgegebenen Schwellwert unterschreitet. Ein Detektionssignal DS kann dann generiert und ausgegeben werden, wenn die Abweichungen D in statistisch signifikanter Weise innerhalb des durch die gespeicherte Streuung VAR quantifizierten Bereichs liegen und/oder gegebenenfalls signifikant häufiger darin liegen, als die gespeicherte maximale Überlappung OLM oder die Überlappungen OL erwarten lassen. Andernfalls wird ein dazu komplementäres Signal generiert und ausgegeben.

## Patentansprüche

1. Computerimplementiertes Verfahren zum Konfigurieren eines Detektors (DET) zum Erkennen eines ersten generativen Maschinenlernmoduls (LLM1), wobei
a) durch einen lernbasierten Datensequenzgenerator (SGEN) eine Vielzahl von Trainings-Datensequenzen (TS) generiert wird, die jeweils in das erste generative Maschinenlernmodul (LLM1) sowie in ein davon verschiedenes, zweites generatives Maschinenlernmodul (LLM2) eingespeist werden, woraus das erste generative Maschinenlernmodul erste Antwortdatensätze (A1) und das zweite generative Maschinenlernmodul zweite Antwortdatensätze (A2) generieren,
b) eine Streuung (VAR) einer ersten statistischen Verteilung (SD1) der ersten Antwortdatensätze (A1) sowie eine Überlappung (OL) einer zweiten statistischen Verteilung (SD2) der zweiten Antwortdatensätze (A2) mit der ersten statistischen Verteilung (SD1) ermittelt werden,
c) der Datensequenzgenerator (SGEN) darauf trainiert wird, die Streuung (VAR) sowie die Überlappung (OL) zu verringern,
d) einer durch den trainierten Datensequenzgenerator (SGEN) generierten Prüf-Datensequenz (CS) ein daraus durch das erste generative Maschinelernmodul (LLM1) generierter Antwortdatensatz (CA) zugeordnet wird, und
e) der Detektor (DET) dazu eingerichtet wird, die Prüf-Datensequenz (CS) in ein zu prüfendes generatives Maschinenlernmodul (LLM) einzuspeisen, einen resultierenden Antwortdatensatz (A) mit dem der Prüf-Datensequenz (CS) zugeordneten Antwortdatensatz (CA) zu vergleichen und abhängig davon ein Detektionssignal (DS) auszugeben.

2. Verfahren nach Anspruch 1, **dadurch gekennzeichnet,**
**dass** eine gewichtete Summe (SC) der Streuung (VAR) und der Überlappung (OL) gebildet wird, und
**dass** das Training des Datensequenzgenerators (SGEN) darauf gerichtet wird, die gewichtete Summe (SC) zu minimieren.

3. Verfahren nach einem der vorhergehenden Ansprüche, **dadurch gekennzeichnet,**
**dass** die ermittelte Streuung (VAR) mit einem vorgegebenen ersten Schwellwert und die ermittelte Überlappung (OL) mit einem vorgegebenen zweiten Schwellwert verglichen werden, und
**dass** das Training beendet wird, sobald der erste Schwellwert sowie der zweite Schwellwert unterschritten werden.

4. Verfahren nach einem der vorhergehenden Ansprüche, **dadurch gekennzeichnet,**
**dass** durch den trainierten Datensequenzgenerator (SGEN) mehrere Prüf-Datensequenzen (CS) generiert werden,
**dass** einer jeweils generierten Prüf-Datensequenz (CS) jeweils ein daraus durch das erste generative Maschinelernmodul (LLM1) generierter Antwortdatensatz (CA) zugeordnet wird, und dass der Detektor (DET) dazu eingerichtet wird, die Prüf-Datensequenzen (CS) in ein zu prüfendes generatives Maschinenlernmodul (LLM) einzuspeisen, einen jeweils resultierenden Antwortdatensatz (A) mit dem der jeweiligen Prüf-Datensequenz (CS) zugeordneten Antwortdatensatz (CA) zu vergleichen und abhängig davon das Detektionssignal (DS) auszugeben.

5. Verfahren nach einem der vorhergehenden Ansprüche, **dadurch gekennzeichnet,**
**dass** einzelne Trainings-Datensequenzen (TS) jeweils viele Male wiederholt in das erste und das zweite generative Maschinenlernmodul eingespeist werden, und
**dass** die erste statistische Verteilung (SD1) über die ersten Antwortdatensätze (A1) der wiederholt eingespeisten Trainings-Datensätze (TS) und die zweite statistische Verteilung (SD2) über die zweiten Antwortdatensätze (A2) der wiederholt eingespeisten Trainings-Datensätze (TS) gebildet werden.

6. Verfahren nach einem der vorhergehenden Ansprüche, **dadurch gekennzeichnet,**
**dass** die ersten Antwortdatensätze (A1) jeweils durch einen ersten Vektor und die zweiten Antwortdatensätze (A2) jeweils durch einen zweiten Vektor kodiert werden,
**dass** die Streuung (VAR) aus einer statistischen Streuung der ersten Vektoren abgeleitet wird, und
**dass** die Überlappung (OL) aus Abständen zwischen den ersten Vektoren und den zweiten Vektoren abgeleitet wird.

7. Verfahren nach einem der vorhergehenden Ansprüche, **dadurch gekennzeichnet, dass** die Überlappung (OL) aus einem Szymkiewicz-Simpson-Koeffizienten und/oder einem Jaccard-Koeffizienten der ersten und zweiten statistischen Verteilung (SD1, SD2) abgeleitet wird.

8. Verfahren nach einem der vorhergehenden Ansprüche, **dadurch gekennzeichnet, dass** der Datensequenzgenerator (SGEN) mittels eines Verfahrens des bestärkenden Lernens trainiert wird.

9. Verfahren nach einem der vorhergehenden Ansprüche, **dadurch gekennzeichnet,**
**dass** mehrere zweite generative Maschinenlernmodule (LLM2) vorgesehen sind,
- in die jeweils die Vielzahl von Trainings-Datensätzen (TS) eingespeist wird, und
- für die jeweils eine Überlappung (OL) einer jeweiligen zweiten statistischen Verteilung (SD2) der zweiten Antwortdatensätze (A2) mit der ersten statistischen Verteilung (SD1) ermittelt wird, und
**dass** der Datensequenzgenerator (SGEN) darauf trainiert wird, die Streuung (VAR) sowie die Überlappungen (OL) zu verringern.

10. Verfahren nach Anspruch 9, **dadurch gekennzeichnet,**
**dass** aus den Überlappungen (OL) eine maximale Überlappung (OLM) selektiert wird, und
**dass** der Datensequenzgenerator (SGEN) darauf trainiert wird, die Streuung (VAR) sowie die maximale Überlappung (OLM) zu verringern.

11. Verfahren nach Anspruch 9 oder 10, **dadurch gekennzeichnet,**
**dass** die Überlappungen (OL) zu einer Gesamtüberlappung addiert werden, und
**dass** der Datensequenzgenerator (SGEN) darauf trainiert wird, die Streuung (VAR) sowie die Gesamtüberlappung zu verringern.

12. Computerimplementiertes Verfahren zur Diebstahldetektion eines generativen Maschinenlernmoduls, wobei
- ein Detektor (DET) durch ein Verfahren nach einem der vorhergehenden Ansprüche konfiguriert wird,
- durch den konfigurierten Detektor (DET) die Prüf-Datensequenz (CS) in ein zu prüfendes generatives Maschinenlernmodul (LLM) eingespeist und ein resultierender Antwortdatensatz (A) eingelesen werden,
- eine Abweichung (D) zwischen dem eingelesenen Antwortdatensatz (A) und dem der Prüf-Datensequenz (CS) zugeordneten Antwortdatensatz (CA) ermittelt wird, und
- abhängig von der ermittelten Abweichung (D) ein Detektionssignal (DS) ausgegeben wird.

13. Diebstahlmeldesystem (DMS) für ein generatives Maschinenlernmodul, eingerichtet zum Ausführen aller Verfahrensschritte eines Verfahrens nach Anspruch 12.

14. Computerprogrammprodukt umfassend Befehle, die bei der Ausführung durch einen Computer diesen veranlassen, ein Verfahren nach einem der Ansprüche 1 bis 12 auszuführen.

15. Computerlesbares Speichermedium mit einem Computerprogrammprodukt nach Anspruch 14.
